(19) **Europäisches Patentamt**
**European Patent Office**
**Office européen des brevets**

(11) **EP 1 585 919 B1**

(12) **EUROPEAN PATENT SPECIFICATION**

(45) Date of publication and mention
of the grant of the patent:
**14.05.2008 Bulletin 2008/20**

(51) Int Cl.:
***F16T 1/34*** *(2006.01)*

(21) Application number: **04701391.7**

(86) International application number:
**PCT/GB2004/000094**

(22) Date of filing: **12.01.2004**

(87) International publication number:
**WO 2004/063620 (29.07.2004 Gazette 2004/31)**

(54) **CONDENSATE TRAP**

KONDENSATABSCHEIDER

PURGEUR DE CONDENSATS

(84) Designated Contracting States:
**AT BE BG CH CY CZ DE DK EE ES FI FR GR HU IE IT LI LU MC NL PT RO SE SI SK TR**

(30) Priority: **13.01.2003 GB 0300716**

(43) Date of publication of application:
**19.10.2005 Bulletin 2005/42**

(73) Proprietor: **SPIRAX-SARCO LIMITED**
**Cheltenham,**
**Gloucestershire GL50 3EN (GB)**

(72) Inventor: **CARMICHAEL, Richard, Quentin Huntley,**
**Gloucestershire GL19 3DY (GB)**

(74) Representative: **Cheyne, John Robert Alexander M. et al**
**HASELTINE LAKE**
**Redcliff Quay**
**120 Redcliff Street**
**Bristol BS1 6HU (GB)**

(56) References cited:
**FR-A- 1 025 288          GB-A- 1 227 128**
**US-A- 3 037 518**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

FIELD OF THE INVENTION

This invention relates to condensate traps.

BACKGROUND OF THE INVENTION

Condensate traps are commonly employed to remove condensed water from steam utilizing plant and equipment, in which context they are normally referred to as steam traps. Many different designs of steam traps have been developed to suit a variety of circumstances. The majority of traps involve a self-actuating mechanism which detects the presence of condensate in the trap, and when necessary opens to allow the condensate to drain. These traps have moving parts and consequently are prone to suffering mechanical failure. An alternative form of trap is a fixed orifice trap. These are generally reliable as they have no moving parts, and in the simplest form comprise an aperture through which condensate is discharged. Flash steam produced as the pressure drops during flow through the aperture acts to reduce the amount of steam that escapes through the aperture.

One problem encountered with fixed orifice traps is that the aperture may become blocked. A further problem is that it is difficult to select an orifice size which matches the condensate load exactly, so that condensate is discharged while preventing live steam from leaking through the aperture. In reality fixed orifice traps tend to be oversized to ensure that condensate is effectively removed while the consequent loss of steam, when little or no condensate is present, is accepted.

J.P 10-89594 U discloses an orifice trap comprising a chamber into which steam and condensate are admitted in a tangential direction. An outlet is defined as an annular slot at the wall of the chamber, and leads to a discharge aperture in the wall of the chamber.

SUMMARY OF THE INVENTION

According to a first aspect of the present invention there is provided a condensate trap comprising a vortex chamber having a peripheral wall, and an inlet and a single outlet which open into the chamber, the inlet being disposed to admit fluid into the chamber in a manner to promote a rotational flow of the fluid in the chamber about a longitudinal axis of the chamber, characterised in that the outlet comprises a conduit extending through an end wall of the chamber and opening into the chamber at an escape aperture which is exposed, in use, to a low pressure region of the rotational flow.

Preferably at least a portion of the side wall has a substantially circular cross section and may be cylindrical. In one embodiment, the cylindrical portion adjoins the wider diameter end of a frusto conical portion. The escape aperture may be provided at the narrower end of the frusto conical portion, for example on the longitudinal axis of the chamber.

In a practical embodiment of a steam trap in accordance with the present invention, the vortex chamber may be provided in a control element supported by a body provided with inlet and outlet passages which communicate respectively with the inlet to the chamber and the escape aperture. The body may be provided with means for connecting the inlet and outlet passages to pipework of a steam utilisation plant.

The control element and the body may abut each other at respective contact surfaces, which are preferably flat and circular. Ports are preferably then provided at the contact surfaces to provide communication between the inlet and outlet passages in the body and the respective inlet and escape aperture in the control element.

The control element may be engageable with the body at the contact surfaces in any one of a plurality of different rotational positions, for example if the contact surfaces are circular as mentioned above. The port communicating with the escape aperture may serve as the centre of rotation between the different rotational positions. To ensure communication between the inlet passage and the inlet in all possible rotational positions, the port communicating with the inlet may take the form of a circular groove centred on the port communicating with the escape aperture.

The inlet may be one of a plurality of inlets, for example three inlets, which are equally distributed around the chamber and which are directed tangentially of the chamber to induce the vortex.

The control element may be secured to the body by means of a cap, which clamps the control element to the contact surface of the body. The chamber may open at a face of the control element opposite the contact surface, in which case the cap preferably closes the chamber.

A second inlet may be provided, which directs the fluid towards the central longitudinal axis of the chamber.

The second inlet may be provided at the same longitudinal portion along the vortex chamber as the first inlet. Switch means may be provided to select either the first or second inlet to introduce the fluid into the chamber. The switch means may be responsive to temperature sensing means, such as a bimetallic strip, which senses the temperature of the fluid upstream of the trap.

The escape aperture may have any suitable diameter, depending on the required discharge rate of condensate. In most circumstances, it is envisaged that the escape aperture diameter will fall in the range 1 mm to 40 mm, although in many embodiments the escape aperture diameter will be less than 30 mm, and possibly less than 10 mm. For example, the diameter of the escape aperture may be 5 mm.

According to a second aspect of the present invention, there is provided a method of controlling a flow of steam and condensate utilising a condensate trap in accordance with the first aspect of the invention, in which method the flow of steam and condensate is directed into the vortex chamber in a direction so as to create a vortex within the chamber, the vortex having a low pressure region situated adjacent the escape aperture.

BRIEF DESCRIPTION OF THE DRAWINGS

For a better understanding of the present invention, and to show more clearly how it may be carried into effect, reference will now be made, by way of example, to the accompanying drawings, in which:-

Figure 1 is a cross section view of a fixed orifice steam trap in accordance with a first embodiment of the present invention;

Figure 2 is a plan view of the fixed orifice steam trap of Figure 1 as viewed from the line II-II in Figure 1;

Figure 3 is a cross section view of a fixed orifice steam trap in accordance with a second embodiment of the present invention;

Figure 4 is a plan view of the fixed orifice steam trap of Figure 3 as viewed from the line IV-IV in Figure 3;

Figure 5 is a sectioned view of another embodiment of a steam trap;

Figure 6 is a plan view of the steam trap of Figure; and

Figure 7 is a plan view of a component of the steam trap of Figures 5 and 6.

DETAILED DESCRIPTION

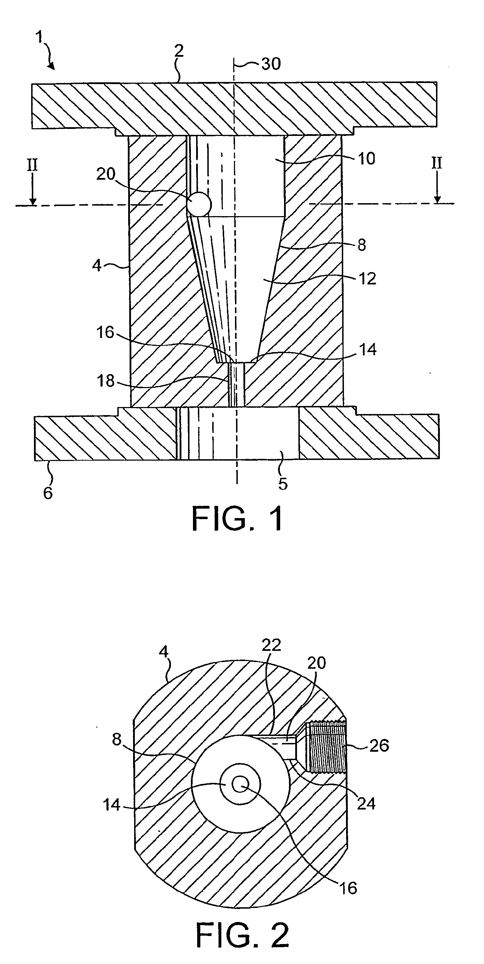

With reference to Figure 1, the steam trap 1 comprises an upper flange 2, a lower flange 6, and a main body 4 secured between the upper and lower flanges 2,6.

The body 4 defines a vortex chamber 8, having an upper portion 10 and a lower portion 12. The upper portion 10 of the vortex chamber is cylindrical and closed off at its upper edge by the upper flange 2. The lower portion is a conical frustum, continuing from the cylindrical wall of the upper portion 10 and tapering to a smaller diameter at its flat base 14 constituted by a surface of a circular end wall of the chamber 8. An escape aperture 16 is provided in the centre of the base 14 on the central axis 30 of the trap 1, leading to a conduit 18 extending vertically downwardly from the aperture 16. The escape aperture 16 is approximately 5 mm diameter in this example. This communicates at its lower opening to the surrounding environment or to a condensate return pipe (not shown), via a circular opening 5 in the lower flange 6.

The conduit 18 has a length which is greater than the diameter of the escape aperture, for example greater than twice the diameter of the escape aperture. In the embodiment shown, the length of the conduit 18 is 12 mm.

A substantially cylindrical inlet passage 20 is provided in the main body 4, and opens into the wall of the chamber 8 at the lower region of the upper portion 10 of the chamber 8. Referring now to Figure 2, the outermost edge 22 of the cylindrical inlet passage 20 continues tangentially from the cylindrical wall of the chamber 8. The innermost edge 24 of the inlet passage 20 is offset from the central axis 30 of the chamber 8 towards the outer edge 22. At the end of the inlet 20 away from the chamber 8, a connector 26 is provided to connect the inlet 20 to a source of steam and condensate.

In use, steam and condensate is introduced tangentially into the chamber 8 through the inlet 20. With the inlet 20 oriented as shown in Figure 2, the steam and condensate flows around the chamber wall 8 in an anticlockwise direction, creating a vortex. The central axis of the vortex lies on or close to the central axis 30 of the chamber 8.

The vortex naturally generates a low pressure at its centre. As the escape aperture 14 is located on the central axis 30, the vortex thus provides a low pressure region directly upstream of the aperture 16. This reduces the discharge rate through the escape aperture, and accordingly a larger escape aperture can be used, reducing the likelihood of the aperture becoming blocked. Additionally, the self regulatory mechanisms of the vortex provide increased condensate discharge in relation to the discharge of steam leaking from the aperture, as the trap exhibits the following characteristics:

During plant start up, cold condensate is built up throughout the system and the condensate load on the trap is at its highest at this time. As the water is cold, little or no flash steam will be created, as the water is typically not near the steam saturation temperature and so will not flash to steam at the pressures encountered, either at the low pressure centre of the vortex, or at pressure of the outside environment. Therefore the cold water will flow freely through the escape aperture 16.

However, as the temperature at the steam trap increases, the water will eventually reach the saturation temperature for the pressure prevailing at the centre of the vortex. At this point vapour or flash steam will begin to form, and it is this flash steam that will be expelled through the escape aperture 16. This has the effect of reducing the discharge through the escape aperture 16, as the density of the flash steam is much lower than that of water.

The low pressure created at the centre of the vortex also reduces the pressure drop from upstream to downstream of the escape aperture 16. Therefore this will also reduce the discharge rate of the aperture 16 as an effect additional to the creation of flash steam as described above.

The flow in the trap is in practice very complex. In accordance with the present invention the vortex chamber creates an area of low pressure upstream of the escape aperture. As is well known in the art, in a vortex pressure energy is converted to kinetic energy. From the conservation of energy (Bernoulli) equation, as the velocity increases the pressure falls. Therefore, low pressure results in low density at any given point, in this case the centre of the vortex. By creating this condition, as steam reaches the escape orifice, the mass discharge rate is reduced in accordance with the flow equation for a single phase fluid:

$$Q = C_d \; x \; (\pi d^2 / 4) \; x \; \sqrt{(\rho \; x \; \Delta p_c)}$$

where

Q = flow rate
$C_d$ = discharge coefficient
d = orifice diameter
$\rho$ = fluid density
$\Delta p_c$ = critical pressure drop

Since the density of water at 20°C is 998 kg/m$^3$ and the density of steam at 5 barg is 3.2 kg/m$^3$, the ratio of the mass discharge rates of steam and water is:

$$\sqrt{\frac{\rho_w}{\rho_s}} = \sqrt{\frac{998}{3.2}} = 17.7$$

Thus, when flash steam is generated just upstream of the escape aperture 16, the mass discharge rate of the steam is smaller than that of water by a factor of more than 17.

In tests, it has been shown that, for a steam line pressure of 11 bar (ie the pressure at the inlet 20), the pressure falls to 7 bar at the centre of the vortex. At 7 bar, the saturation temperature is 165°, and so if the temperature of the condensate entering the trap falls below 165°C, no flash steam is generated and the condensate is discharged rapidly. Above this temperature the volume.of flash steam generated will steadily increase, progressively reducing the rate of discharge of the escape aperture 16. It has been found that the mass rate of discharge falls to 50% of its initial (cold water) value as the condensate temperature increases from ambient temperature to near saturation temperature.

Therefore a fixed orifice trap in accordance with the present invention utilises the Bernoulli effect to provide a naturally self regulating discharge characteristic. Cold water is discharged rapidly but the discharge diminishes rapidly as the saturation temperature of the fluid is approached and flash steam is generated. Once the discharge rate exceeds the condensate load, some steam is inevitably lost, but the high flow resistance of the vortex minimises this so that at the extreme where no condensate is present, the loss is just 5% of the cold water discharge capacity of the escape aperture. In a more typical application where the hot condensate load is 60% of the capacity of the discharge escape aperture, the loss will be around 2% of the cold water capacity.

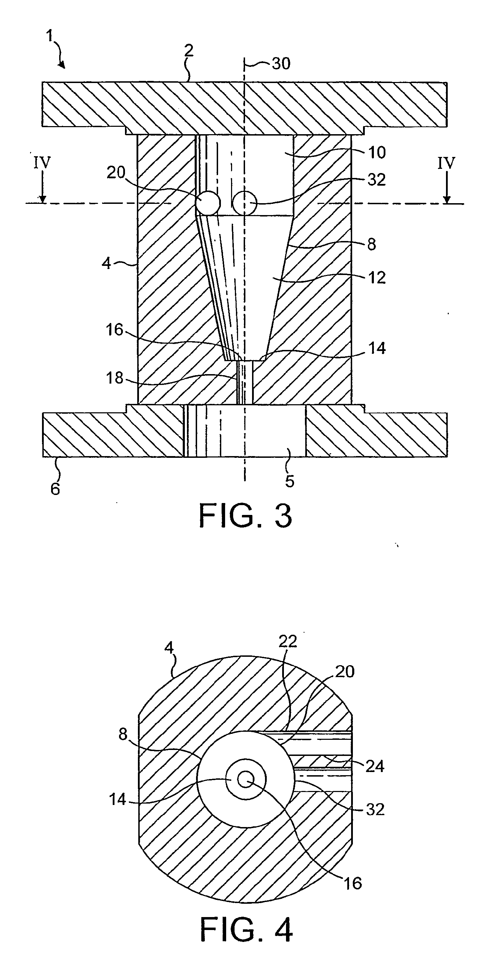

Referring now to Figure 3, a second embodiment of the present invention is shown. Reference numerals in Figures 3 and 4 relate to similar features as in Figures 1 and 2.

The steam trap shown in Figures 3 and 4 is provided with a second inlet 32 which extends radially of the chamber 8 such that the second inlet 32 directs steam and condensate into the chamber 8 centrally, towards the central axis 30 of the chamber 8.

In use, a switching mechanism (not shown) is provided upstream of the trap 1, either integrally or as a separate component, and switches the flow between the first 20 and second 32 inlets. This is controlled by sensing means which determines the type of fluid in the pipeline upstream of the trap 1. This may be an electronic system, or a self actuating system which responds to temperature, for example employing a bimetallic element.

If the flow is directed to the first inlet 20, steam and condensate is introduced tangentially into the chamber 8 through the inlet 20. The steam and condensate flows around the chamber wall 8 in an anticlockwise direction, with reference to Figure 4, creating a vortex. The centre of the vortex lies along the central axis 30 of the chamber 8. As discussed above, the low pressure volume created by the vortex upstream of the escape aperture 16 restricts the discharge through the escape aperture 16.

If the flow is directed to the second inlet 32, as the inlet 32 is directed towards the central axis of the chamber 8, no vortex is generated. The trap then acts as a conventional fixed orifice trap. The pressure upstream of the escape aperture 16 is higher than with the vortex, and the aperture is less restricted. In this way the characteristics of the flow trap can be altered according to the load. For example, if the fluid upstream of the inlets is at a low temperature then it is likely to be all, or nearly all, condensate, in which case the second inlet 20 may be used thereby avoiding the creation of a vortex in the chamber 8, and therefore preventing the associated restriction of the escape aperture 16 by the generation of flash steam. This will expel condensate as quickly as possible.

If the fluid upstream of the inlets is predominantly steam, the first inlet 20 is selected. This creates a vortex in the chamber and restricts the escape aperture 16 accordingly, therefore reducing the amount of steam lost to the environment.

In this way, the restriction of the discharge through the escape aperture can be controlled in response to the temperature of the fluid entering the trap, and an improved ratio of condensate to live steam discharge is achieved.

**EP 1 585 919 B1**

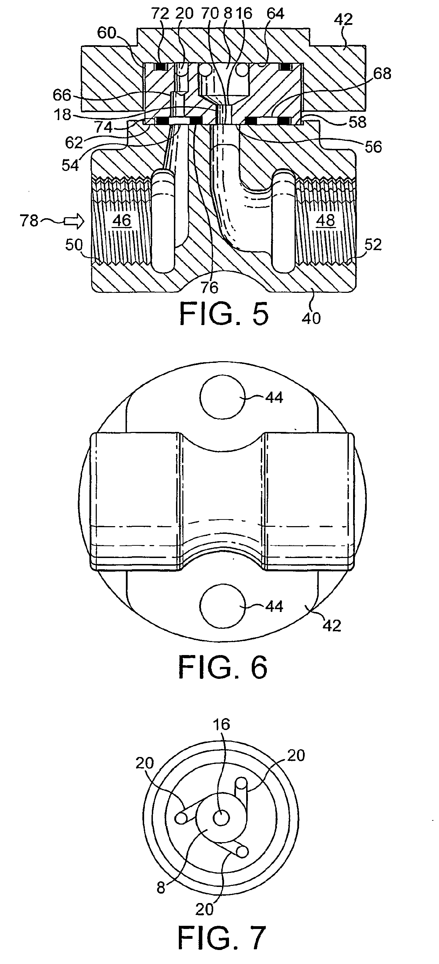

Figures 5 to 7 show a practical embodiment of a steam trap including a vortex chamber 8. The chamber 8 is secured to a body 40 by a cap 42 which is fastened to the body 40 by bolts 44 (Figure 6). The body 40 comprises an inlet passage 46 and an outlet passage 48 which have aligned threaded bores 50, 52 for connection to further pipework. The passages 46, 48 extend to respective ports 54, 56 at a flat, circular contact surface 58 formed on the body 40.

The chamber 8 is formed in a control element 60 which is of generally cylindrical form having opposite axial end faces 62 and 64. The end face 62 constitutes a contact surface and abuts the contact surface 58 of the body 40. The chamber 8 opens at the face 64, and the inlets 20 are formed as grooves in the face 64. As shown in Figure 7, there are three of the inlets 20 which are equally distributed about the chamber 8 and are directed transversely of the chamber 8.

The chamber 8 is generally cylindrical over its full length, although it has a shallow frusto conical end wall in which the escape aperture 16 is situated. In alternative embodiments, the frusto conical end wall may be replaced by a transverse, radially extending end wall.

Each inlet 20 is connected by a respective passageway 66 to a port 68 in the form of a circular groove. This groove 68 is centred on a port 70 and the end of the conduit 18 away from the escape aperture 16. The arrangement of the port 70 and the groove 68 is such that the control element 60 can be placed on the contact surface 58 in any orientation about the port 70 while maintaining communication between the inlets 20 and the escape aperture 16 and the respective inlet and outlet passages 46 and 48 by way of the ports 54 and 56. Seals 72, 74 and 76 are provided to prevent leakage at the faces 62 and 64.

The cap 42 clamps the control element 60 against the contact face 58 of the body 40. The cap 42 closes the chamber 8 and the inlets 20. In operation, steam and condensate enters the trap as indicated by an arrow 78 and passes through the inlet passage 46 to the inlets 20 by way of the port 54, a groove 68 and the passageways 66. As described above with reference to Figures 1 to 4, flow through the inlet 20 creates a vortex within the chamber 8 which regulates flow through the escape aperture 16. Condensate and steam passing through the passage 18 enters the outlet passage 48 by way of the ports 70 and 56, for discharge or return to the boiler.

The construction shown in Figure 5 makes it simple to exchange one control element 60 for another without disturbing the connection between the body 40 and the surrounding pipework. Such exchange may be desirable if, for example, a control element 60 of different characteristics (for example with an escape aperture 16 of a different diameter), or to replace a worn or damaged control element 60 for another.

**Claims**

1. A condensate trap comprising a vortex chamber (8) having a peripheral wall, and an inlet (2) and a single outlet (16, 18) which open into the chamber (10), the inlet (20) being disposed to admit fluid into the chamber (8) in a manner to promote a rotational flow of the fluid in the chamber (8) about a longitudinal axis (30) of the chamber (8), **characterised in that** the outlet (16, 18) comprises a conduit (18) extending through an end wall (14) of the chamber (8) and opening into the chamber (8) at an escape aperture (16) which is exposed, in use, to a low pressure region of the rotational flow.

2. A condensate trap as claimed in claim 1, **characterised in that** at least a portion (10) of the peripheral wall of the vortex chamber (8) is cylindrical.

3. A condensate trap as claimed in claim 1 or 2, **characterised in that** at least a portion (12) of the peripheral wall of the vortex chamber (8) is frusto conical.

4. A condensate trap as claimed in claims 2 and 3, **characterised in that** the cylindrical portion (10) adjoins the wider diameter end of the frusto conical portion (12).

5. A condensate trap as claimed in claim 4, **characterised in that** the inlet (20) opens into the cylindrical portion (10).

6. A condensate trap as claimed in claims 3 to 5, **characterised in that** the escape aperture (16) is disposed at the narrow end of the frusto conical portion (12).

7. A condensate trap as claimed in any one of the preceding claims, **characterised in that** the escape aperture (16) is situated on the longitudinal axis (30) of the vortex chamber (8).

8. A condensate trap as claimed in any one of the preceding claims, **characterised in that** the vortex chamber (8) is provided in a control element (60) supported by a body (40) provided with inlet and outlet passages (46, 48), the inlet passage (46) communicating with the inlet (20) to the chamber (8) and the outlet passage (48) communicating with the conduit (18).

9. A condensate trap as claimed in claim 8, **characterised in that** the control element (60) and the body (40) abut each other at respective contact surfaces (62, 58), the inlet and outlet passages (46, 48) opening at respective ports (54, 56) on the contact surface (58) of the body (40), and the inlet (20) and the conduit (18) communicating with respective ports (68, 70) at the contact surface (62) of the control element (60).

10. A condensate trap as claimed in claim 9, **characterised in that** the control element (60) is engageable with the body (40) in any one of a plurality of different rotational positions about the port (70) communicating with the conduit (18).

11. A condensate trap as claimed in claim 10, **characterised in that** the port (68) communicating with the inlet (20) comprises a circular groove in the contact face (62), centred on the port (70) communicating with the conduit (18).

12. A condensate trap as claimed in any one of claims 8 to 11, **characterised in that** the inlet (20) is one of a plurality of inlets which are directed tangentially of the chamber (8) and are distributed equally around the chamber (8).

13. A condensate trap as claimed in any one of claims 9 to 12, **characterised in that** the control element (60) is secured to the body (40) by a cap (42).

14. A condensate trap as claimed in claim 13, **characterised in that** the chamber (8) is open at a face of the control element (60) opposite the contract surface (62), the chamber (8) being closed by the cap (42).

15. A condensate trap as claimed in any one of the preceding claims, **characterised in that** a second inlet (32) is provided, which directs the fluid towards the longitudinal axis (30) of the chamber (8).

16. A condensate trap as claimed in claim 15, **characterised in that** the second inlet (32) is provided at the same longitudinal position along the vortex chamber (8) as the first inlet (20).

17. A condensate trap as claimed in claim 15 or 16, **characterised in that** switch means is provided to select either the first (20) or second inlet (32) to provide the fluid into the chamber (8).

18. A condensate trap as claimed in claim 17, **characterised in that** the switch means is responsive to temperature sensing means, the temperature sensing means sensing the temperature of the fluid upstream of the trap.

19. A condensate trap according to any one of the preceding claims, **characterised in that** the diameter of the escape aperture (16) is not greater than 40mm.

20. A condensate trap according to claim 19, **characterised in that** the diameter of the escape aperture (16) is not greater than 30mm.

21. A steam plant provided with a condensate trap in accordance with any one of the preceding claims.

22. A method of controlling a flow of steam and condensate utilising a condensate trap in accordance with any one of the preceding claims in which method the flow of steam and condensate is directed into the vortex chamber in a direction so as to create a vortex within the chamber, the vortex having a low pressure region situated adjacent the escape aperture.

**Patentansprüche**

1. Kondensatabscheider, umfassend eine Wirbelkammer (8), die eine Umfangswand aufweist, einen Einlass (20) und einen einzigen Auslass (16, 18), die sich in die Kammer (10) öffnen, wobei der Einlass (20) so angeordnet ist, dass Fluid in einer Weise in die Kammer (8) eintreten kann, durch die eine rotierende Strömung des Fluids in der Kammer (8) um eine Längsachse (30) der Kammer (8) gefördert wird, **dadurch gekennzeichnet, dass** der Auslass (16, 18) eine Leitung (18) umfasst, die sich durch eine Endwand (14) der Kammer (8) erstreckt und sich an einer Austrittsöffnung (16) in die Kammer (8) öffnet, die bei Gebrauch in einem Unterdruckgebiet der rotierenden Strömung liegt.

2. Kondensatabscheider nach Anspruch 1, **dadurch gekennzeichnet, dass** zumindest ein Abschnitt (10) der Umfangswand der Wirbelkammer (8) zylindrisch ist.

3. Kondensatabscheider nach Anspruch 1 oder 2, **dadurch gekennzeichnet, dass** zumindest ein Abschnitt (12) der Umfangswand der Wirbelkammer (8) die Form eines Kegelstumpfs hat.

4. Kondensatabscheider nach Anspruch 2 und 3, **dadurch gekennzeichnet, dass** sich der zylindrische Abschnitt (10) an das Ende des kegelstumpfförmigen Abschnitts (12) mit dem größeren Durchmesser anschließt.

5. Kondensatabscheider nach Anspruch 4, **dadurch gekennzeichnet, dass** sich der Einlass (20) in den zylindrischen Abschnitt (10) öffnet.

6. Kondensatabscheider nach Anspruch 3 bis 5, **dadurch gekennzeichnet, dass** die Austrittsöffnung (16) am engen Ende des kegelstumpfförmigen Abschnitts (12) angeordnet ist.

7. Kondensatabscheider nach irgendeinem der vorhergehenden Ansprüche, **dadurch gekennzeichnet, dass** die Austrittsöffnung (16) auf der Längsachse (30) der Wirbelkammer (8) sitzt.

8. Kondensatabscheider nach irgendeinem der vorhergehenden Ansprüche, **dadurch gekennzeichnet, dass** die Wirbelkammer (8) in einem Steuerelement (60) bereitgestellt ist, das von einem Körper (40) gehalten wird, der mit einem Einlassdurchgang (46) und einem Auslassdurchgang (48) versehen ist, wobei der Einlassdurchgang (46) mit dem Einlass (20) in die Kammer (8) verbunden ist, und der Auslassdurchgang (48) mit der Leitung (18) verbunden ist.

9. Kondensatabscheider nach Anspruch 8, **dadurch gekennzeichnet, dass** das Steuerelement (60) und der Körper (40) an jeweiligen Berührflächen (62, 58) aneinander anliegen und sich der Einlassdurchgang (46) und der Auslassdurchgang (48) in entsprechende Öffnungen (54, 56) der Berührfläche (58) des Körpers (40) öffnen, und dass der Einlass (20) und die Leitung (18) mit entsprechenden Öffnungen (68, 70) in der Berührfläche (62) des Steuerelements (60) verbunden sind.

10. Kondensatabscheider nach Anspruch 9, **dadurch gekennzeichnet, dass** das Steuerelement (60) in den Körper (40) in irgendeiner Position aus einer Anzahl unterschiedlicher Drehpositionen um die Öffnung (70) eingreifen kann, die mit der Leitung (18) verbunden ist.

11. Kondensatabscheider nach Anspruch 10, **dadurch gekennzeichnet, dass** die Öffnung (68), die mit dem Einlass (20) verbunden ist, eine kreisförmige Nut in der Berührfläche (62) aufweist, die auf die Öffnung (70) zentriert ist, die mit der Leitung (18) verbunden ist.

12. Kondensatabscheider nach irgendeinem der Ansprüche 8 bis 11, **dadurch gekennzeichnet, dass** der Einlass (20) ein Einlass aus einer Anzahl Einlässe ist, die tangential zur Kammer (8) verlaufen und gleichmäßig um die Kammer (8) herum verteilt sind.

13. Kondensatabscheider nach irgendeinem der Ansprüche 9 bis 12, **dadurch gekennzeichnet, dass** das Steuerelement (60) mit einer Kappe (42) am Körper (40) befestigt ist.

14. Kondensatabscheider nach Anspruch 13, **dadurch gekennzeichnet, dass** die Kammer (8) auf einer Seite des Steuerelements (60) offen ist, die der Berührfläche (62) gegenüberliegt, und dass die Kammer (8) von der Kappe (42) verschlossen wird.

15. Kondensatabscheider nach irgendeinem der vorhergehenden Ansprüche, **dadurch gekennzeichnet, dass** ein zweiter Einlass (32) vorhanden ist, der das Fluid hin zur Längsachse (30) der Kammer (8) führt.

16. Kondensatabscheider nach Anspruch 15, **dadurch gekennzeichnet, dass** der zweite Einlass (32) auf der gleichen Längsachsenposition entlang der Wirbelkammer (8) bereitgestellt ist wie der erste Einlass (20).

17. Kondensatabscheider nach Anspruch 15 oder 16, **dadurch gekennzeichnet, dass** eine Schaltvorrichtung vorhanden ist, mit der man entweder den ersten Einlass (20) oder den zweiten Einlass (32) für den Eintritt des Fluids in die Kammer (8) wählen kann.

18. Kondensatabscheider nach Anspruch 17, **dadurch gekennzeichnet, dass** die Schaltvorrichtung auf eine Temperaturerfassungsvorrichtung anspricht, wobei die Temperaturerfassungsvorrichtung die Temperatur des Fluids stromaufwärts des Abscheiders erfasst.

19. Kondensatabscheider nach irgendeinem vorhergehenden Anspruch, **dadurch gekennzeichnet, dass** der Durchmesser der Austrittsöffnung (16) nicht größer ist als 40 mm.

20. Kondensatabscheider nach Anspruch 19, **dadurch gekennzeichnet, dass** der Durchmesser der Austrittsöffnung (16) nicht größer ist als 30 mm.

21. Dampfanlage, die mit einem Kondensatabscheider gemäß irgendeinem der vorhergehenden Ansprüche versehen ist.

22. Verfahren zum Regeln einer Strömung aus Dampf und Kondensat mit Hilfe eines Kondensatabscheiders gemäß irgendeinem der vorhergehenden Ansprüche, wobei in dem Verfahren die Strömung aus Dampf und Kondensat in einer Richtung in die Wirbelkammer geführt wird, die einen Wirbel in der Kammer erzeugt, und der Wirbel einen Unterdruckbereich aufweist, der sich in der Nähe der Austrittsöffnung befindet.

## Revendications

1. Purgeur de condensat comprenant une chambre à tourbillon (8) ayant une paroi périphérique, et une entrée (2) et une sortie unique (16, 18) qui s'ouvrent dans la chambre (10), l'entrée (20) étant disposée pour admettre un fluide dans la chambre (8) de manière à promouvoir un écoulement rotationnel du fluide dans la chambre (8) autour d'un axe longitudinal (30) de la chambre (8), **caractérisé en ce que** la sortie (16, 18) comprend un conduit (18) s'étendant à travers une paroi d'extrémité (14) de la chambre (8) et s'ouvrant dans la chambre (8) par une ouverture d'échappement (16) qui est exposée, à l'utilisation, à une région de basse pression de l'écoulement rotationnel.

2. Purgeur de condensat selon la revendication 1, **caractérisé en ce qu'**au moins une partie (10) de la paroi périphérique de la chambre à tourbillon (8) est cylindrique.

3. Purgeur de condensat selon la revendication 1 ou 2, **caractérisé en ce qu'**au moins une partie (12) de la paroi périphérique de la chambre à tourbillon (8) est tronconique.

4. Purgeur de condensat selon les revendications 2 et 3, **caractérisé en ce que** la partie cylindrique (10) est contiguë à l'extrémité de plus grand diamètre de la partie tronconique (12).

5. Purgeur de condensat selon la revendication 4, **caractérisé en ce que** l'entrée (20) s'ouvre dans la partie cylindrique (10).

6. Purgeur de condensat selon les revendications 3 à 5, **caractérisé en ce que** l'ouverture d'échappement (16) est disposée à l'extrémité de plus petit diamètre de la partie tronconique (12).

7. Purgeur de condensat selon l'une quelconque des revendications précédentes, **caractérisé en ce que** l'ouverture d'échappement (16) est située sur l'axe longitudinal (30) de la chambre à tourbillon (8).

8. Purgeur de condensat selon l'une quelconque des revendications précédentes, **caractérisé en ce que** la chambre à tourbillon (8) est ménagée dans un élément de commande (60) supporté par un corps (40) pourvu de passages (46, 48) d'entrée et de sortie, le passage d'entrée (46) communiquant avec l'entrée (20) de la chambre (8) et le passage de sortie (48) communiquant avec le conduit (18).

9. Purgeur de condensat selon la revendication 8, **caractérisé en ce que** l'élément de commande (60) et le corps (40) viennent en butée l'un contre l'autre par des surfaces de contact respectives (62, 58), les passages d'entrée et de sortie (46, 48) s'ouvrant par des orifices respectifs (54, 56) sur la surface de contact (58) du corps (40), et l'entrée (20) et le conduit (18) communiquant avec des orifices respectifs (68, 70) sur la surface de contact (62) de l'élément de commande (60).

10. Purgeur de condensat selon la revendication 9, **caractérisé en ce que** l'élément de commande (60) est susceptible de venir au contact du corps (40) en une quelconque d'une pluralité de positions rotationnelles différentes autour de l'orifice (70) communiquant avec le conduit (18).

11. Purgeur de condensat selon la revendication 10, **caractérisé en ce que** l'orifice (68) communiquant avec l'entrée (20) comprend une gorge circulaire ménagée dans la surface de contact (62), centrée sur l'orifice (70) communiquant avec le conduit (18).

12. Purgeur de condensat selon l'une quelconque des revendications 8 à 11, **caractérisé en ce que** l'entrée (20) est l'une d'une pluralité d'entrées qui sont dirigées tangentiellement à la chambre (8) et sont également réparties autour de la chambre (8).

13. Purgeur de condensat selon l'une quelconque des revendications 9 à 12, **caractérisé en ce que** l'élément de commande (60) est fixé au corps (40) par un capuchon (42).

14. Purgeur de condensat selon la revendication 13, **caractérisé en ce que** la chambre (8) est ouverte sur une surface de l'élément de commande (60) opposée à la surface de contact (62), la chambre (8) étant fermée par le capuchon (42).

15. Purgeur de condensat selon l'une quelconque des revendications précédentes, **caractérisé en ce qu'**une deuxième entrée (32) est prévue, qui dirige le fluide vers l'axe longitudinal (30) de la chambre (8).

16. Purgeur de condensat selon la revendication 15, **caractérisé en ce que** la deuxième entrée (32) est prévue à la même position longitudinale, le long de la chambre à tourbillon (8), que la première entrée (20).

17. Purgeur de condensat selon la revendication 15 ou 16, **caractérisé en ce que** des moyens de commutation sont prévus pour sélectionner soit la première (20), soit la deuxième entrée (32) pour délivrer le fluide dans la chambre (8).

18. Purgeur de condensat selon la revendication 17, **caractérisé en ce que** les moyens de commutation réagissent à des moyens de détection de température, les moyens de détection de température détectant la température du fluide en amont du purgeur.

19. Purgeur de condensat selon l'une quelconque des revendications précédentes, **caractérisé en ce que** le diamètre de l'ouverture d'échappement (16) n'est pas supérieur à 40 mm.

20. Purgeur de condensat selon la revendication 19, **caractérisé en ce que** le diamètre de l'ouverture d'échappement (16) n'est pas supérieur à 30 mm.

21. Installation à vapeur pourvue d'un purgeur de condensat selon l'une quelconque des revendications précédentes.

22. Procédé de contrôle d'un écoulement de vapeur et de condensat utilisant un purgeur de condensat selon l'une quelconque des revendications précédentes, avec lequel procédé l'écoulement de vapeur et de condensat étant dirigé dans la chambre à tourbillon dans une direction telle qu'un tourbillon soit créé à l'intérieur de la chambre, ce tourbillon ayant une région de basse pression située de manière adjacente à l'ouverture d'échappement.

FIG. 1

FIG. 2

FIG. 3

FIG. 4

FIG. 5

FIG. 6

FIG. 7

**EP 1 585 919 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10089594 U